Europäisches Patentamt

European Patent Office

Office européen des brevets

(19)

(11) Numéro de publication: **0 254 638**
**B1**

(12) **FASCICULE DE BREVET EUROPEEN**

(45) Date de publication du fascicule du brevet:
05.12.90

(21) Numéro de dépôt: 87401691.8

(22) Date de dépôt: 20.07.87

(51) Int. Cl.⁵: **B60N 2/22**, B60N 2/42

(54) Dispositif d'augmentation des résistances des mécanismes articulés.

(30) Priorité: 22.07.86 FR 8610606

(43) Date de publication de la demande:
27.01.88 Bulletin 88/4

(45) Mention de la délivrance du brevet:
05.12.90 Bulletin 90/49

(84) Etats contractants désignés:
AT BE CH DE ES GB GR IT LI LU NL SE

(56) Documents cités:
DE-A- 2 449 436
FR-A- 1 251 593
US-A- 4 225 178

(73) Titulaire: A. & M. COUSIN Etablissements COUSIN
FRERES, Le Bois de Flers, F-61103 Flers Cédex
Orne(FR)

(72) Inventeur: Pipon, Yves, "La Garenne"
St-Georges-des-Groseillers, F-61100 Flers(FR)
Inventeur: Chales, Bernard, "La Haute Guermondière,
F-61100 Aubusson Flers(FR)

(74) Mandataire: Madeuf, Claude Alexandre Jean et al,
CABINET MADEUF 3, avenue Bugeaud,
F-75116 Paris(FR)

ACTORUM AG

## Description

On connaît déjà depuis fort longtemps des dispositifs d'articulation que l'on place entre l'assise et le dossier d'un siège pour assurer une inclinaison désirée du dossier par rapport à l'assise.

Ces dispositifs sont également utiléspour la rehausse de sièges, c'est-à-dire le réglage en inclinaison et en hauteur de l'assise d'un siège. Ce mouvement est d'ailleurs normalement appelé le réglage d'assiette de l'assise.

Les mécanismes utilisés, qui sont soit continus, soit discontinus, comportent donc des parties fixes et des parties mobiles liées entre elles par des organes mécaniques divers qui subissent de nombreux efforts surtout lors de chocs accidentels conduisant à la désolidarisation par rupture de certains organes tels que dentures, grains, pignons, etc. servant à la liaison entre les parties fixes et les parties mobiles et assurant le positionnement relatif des deux parties du siège ou du siège lui-même, suivant qu'il s'agit de régler le dossier ou l'assiette du siège.

Dans le cas où ces mécanismes subissent des efforts dépassant les efforts normaux admissibles, il se produit, dans un premier temps, dans la zone qui sert au positionnement, des tassements et des déformations réversibles mais n'entraînant pas de rupture et, dans ce cas, on peut arriver, par des moyens divers, à rattraper les jeux ainsi produits ainsi que les flexions.

Mais, dans le cas d'efforts beaucoup plus importants, il se produit des déformations ou même des ruptures entraînant la destruction pratiquement totale de ces mécanismes. Ceci est très grave puisque les sièges et leurs organes doivent résister à des efforts très importants car très souvent dans les véhicules modernes les ceintures de sécurité sont solidaires de ces sièges.

On connaît par le DE-A 2 449 436 un moyen de blocage du flasque mobile sur le flasque fixe d'une articulation de dossier de siège au moyen d'une denture extérieure portée par le flasque fixe coopérant avec une pièce montée coulissante par des pions 44, 45 solidaires du flasque mobile mais cette construction, si elle avait pour objet de solidariser le flasque mobile sur le flasque fixe sous l'effet d'un choc violent, nécessitait une construction particulière avec adjonction de pièces ce qui était une solution beaucoup plus compliquée et coûteuse.

La présente invention remédie à ces inconvénients en créant des mécanismes qui sont réalisés de façon à permettre un blocage temporaire des pièces mobiles par rapport aux pièces fixes sous de grands efforts sans déformation permanente et sans rupture de façon que lorsque ces efforts importants cessent, les différents éléments du mécanisme considéré reprennent pratiquement leur place antérieure sans hystérésis et permettent donc de nouveau un fonctionnement normal.

Conformément à l'invention, le dispositif d'augmentation des résistances des mécanismes articulés utilisables pour le réglage en inclinaison du dossier d'un siège ou la rehausse de sièges afin de régler l'assiette de mécanisme comprenant un flasque fixe solidaire de l'élément fixe du siège et un flasque mobile solidaire de l'autre partie mobile du siège, ces deux flasques pouvant tourner l'un par rapport à l'autre à l'aide d'un ensemble mécanique continu ou discontinu avec blocage par tous moyens convenables est caractérisé en ce que le flasque fixe porte près de la périphérie intérieure, sur une zone interne de ce flasque fixe, une fine denture continue et circulaire qui n'est normalement pas en contact avec une fine denture continue et circulaire en regard disposée sur une zone périphérique externe du flasque mobile, ces fines dentures continues et circulaires venant en contact l'une avec l'autre sur une longueur prédéterminée lors d'une déformation du mécanisme de l'articulation sous l'effet d'un choc brutal afin d'augmenter la résistance pour éviter des déformations ou des ruptures entraînant la destruction de ces mécanismes.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une vue de face d'une articulation à flasque allongé comportant un mécanisme épicycloïdal pour le déplacement du flasque mobile par rapport au flasque fixe.

La fig. 2 est une coupe longitudinale sensiblement suivant la ligne II-II de la fig. 1.

La fig. 3 est une vue, à très grande échelle, d'une partie supérieure de l'articulation en coupe visible à la fig. 2.

La fig. 4 est une autre articulation à flasque allongé à commande par train épicycloïdal et montrant une variante de réalisation.

La fig. 5 est une coupe sensiblement suivant la ligne V-V de la fig. 4.

La fig. 6 est une vue, à très grande échelle, de la partie supérieure en coupe de l'articulation de la fig. 5.

La fig. 7 est une coupe d'une seconde variante d'articulation à commande par train épicycloïdal à flasques circulaires.

La fig. 8 est une vue, à grande échelle, de la partie inférieure de l'articulation de la fig. 7.

La fig. 9 est une coupe diamétrale d'une troisième variante de l'articulation à verrouillage par grains.

La fig. 10 est une vue, à grande échelle, de la partie inférieure de la fig. 9 représentant le type de denture de renforcement utilisée dans tous les cas cités.

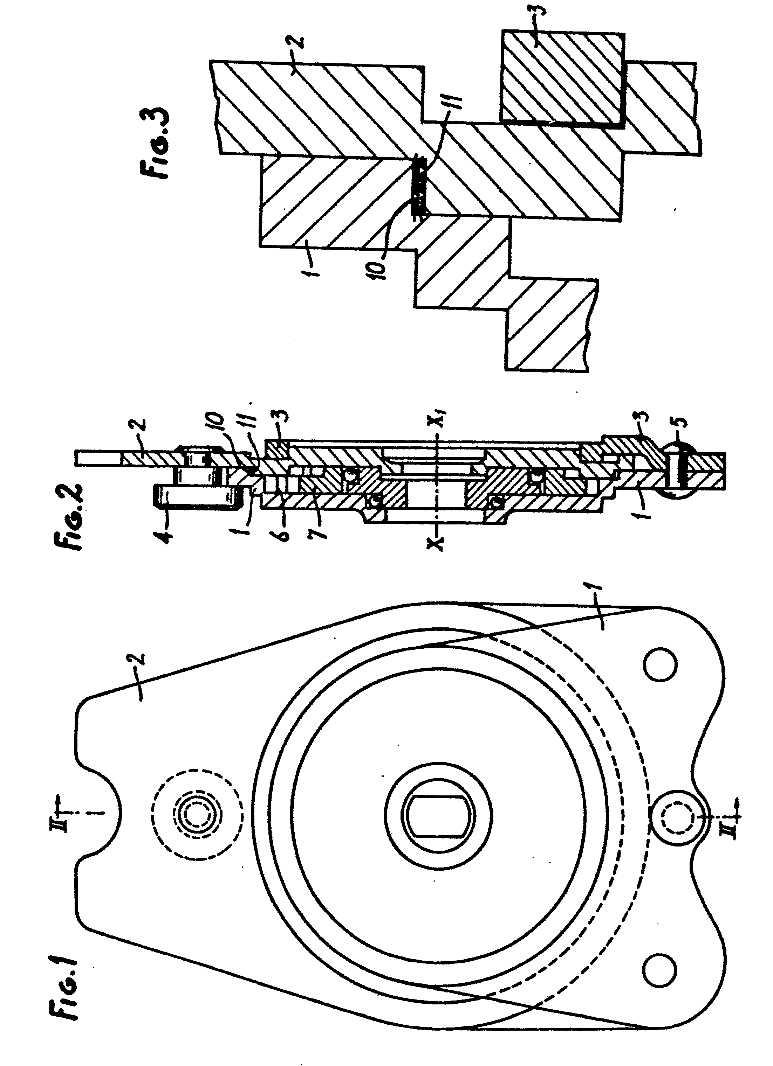

A la fig. 1, on a représenté une articulation à flasques allongés, le flasque 1 solidaire de l'assise étant fixe et le flasque supérieur 2 étant mobile c'est-à-dire solidaire du dossier.

L'axe de rotation du dossier par rapport à l'assise passe suivant la ligne X-X$_1$ (voir fig. 2) qui montre que le flasque mobile 2 est maintenu sur le flasque fixe 1, à sa partie inférieure, par une garniture semicirculaire 3 et, à sa partie supérieure, par une pion 4.

5 désigne un rivet maintenant la garniture semicirculaire 3 sur la partie inférieure du flasque fixe 1.

Le flasque mobile 2 et le flasque fixe 1 délimitent entre eux un espace ou chambre 6 qui contient un mécanisme 7 qui est ici un mécanisme épicycloïdal permettant, par un moyen parfaitement connu, le déplacement angulaire du flasque mobile 2 par rapport au flasque fixe 1.

Si l'on regarde la fig. 3, on constate que le pourtour intérieur du flasque fixe 1 porte une fine denture 10 faisant face à une fine denture 11 portée par la partie correspondante du flasque mobile 2. Ces deux dentures fines très voisines n'engrènent pas l'une avec l'autre pendant les mouvements relatifs des flasques fixe et mobile du fait qu'il subsiste un léger espace entre ces dentures 10 et 11. Mais, dans le cas où, sous l'effet d'un effort considérable, par exemple lors d'un choc que subit le véhicule dans lequel sont montés les sièges équipés de ces articulations, les flasques fixe 1 et mobile 2 peuvent être amenés à se rapprocher sur une partie de la périphérie des fines dentures 10 et 11 qui alors engrènent en augmentant ainsi la résistance de l'ensemble d'une manière considérable puisqu'à ce moment ces deux pièces maîtresses de l'articulation sont fortement appliquées l'une sur l'autre, c'est-à-dire sur une large surface de contact, en assurant ainsi une grande résistance et donc une grande sécurité.

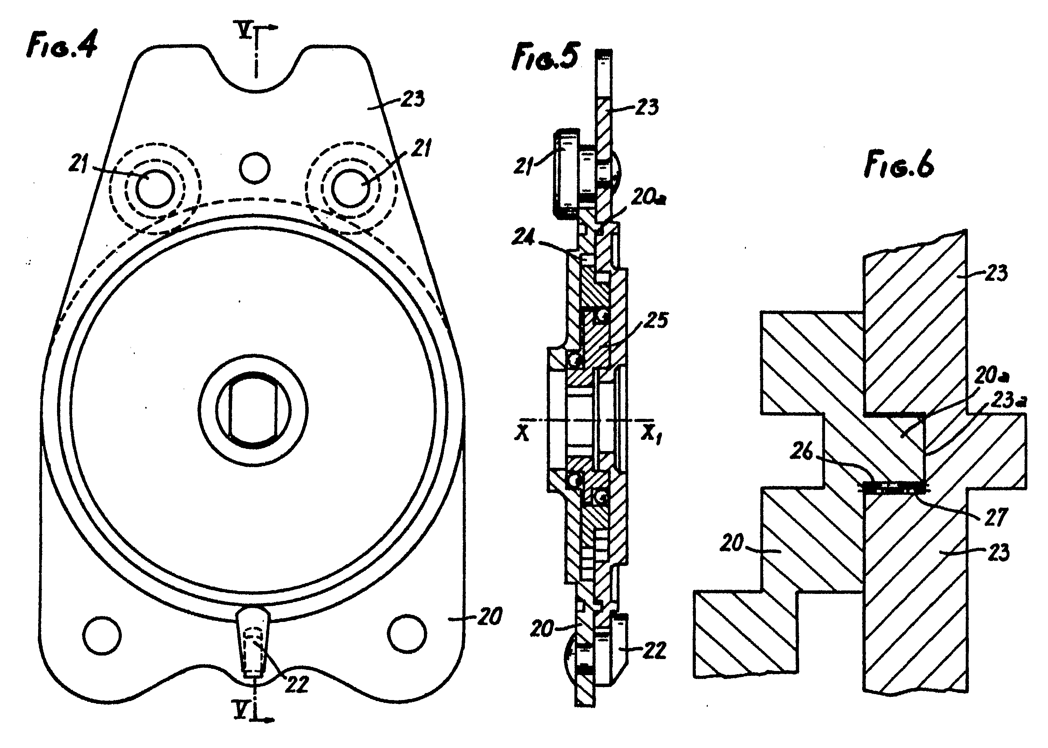

A la fig. 4, on retrouve un flasque fixe allongé 20 solidaire de l'assise qui est maintenu par l'intermédiaire de pions 21, 22 sur le flasque mobile 23, également conformé de façon à constituer une chambre intérieure 94 qui contient le mécanisme 25 permettant la rotation du flasque mobile 23 par rapport au flasque fixe 20. La rotation s'effectue suivant l'axe $x$-$x_1$ (voir fig. 5).

Comme le montre la fig. 6, le flasque fixe 20 présente une couronne circulaire 20a pénétrant dans une gorge circulaire 23a du flasque mobile 23 et, comme dans le cas précédent, la couronne circulaire 20a porte, sur sa face interne, une denture fine 26 faisant face à une denture fine externe 27 venue dans la gorge circulaire 23a du flasque mobile 23. Comme dans le cas précédent, lors d'efforts considérables, les dentures 26, 27, en s'embriquant l'une dans l'autre sur une grande surface, augmentent considérablement la résistance de l'articulation.

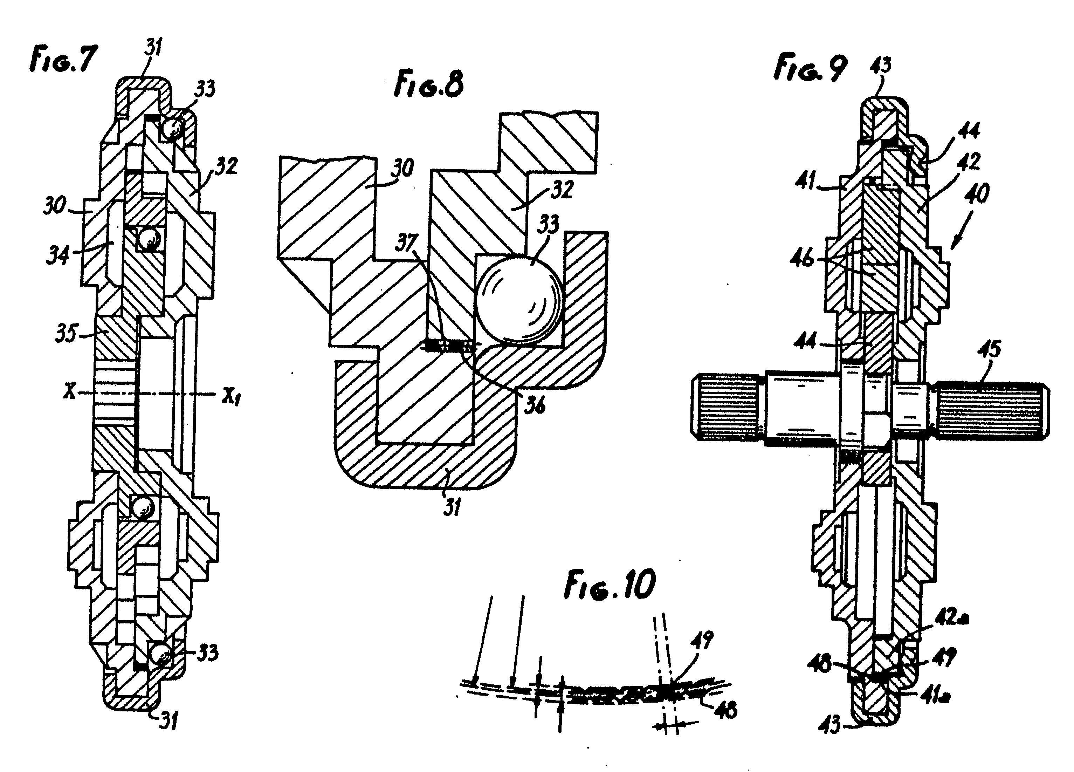

Finalement, à la fig. 7 on a représenté une articulation cylindrique à flasque fixe 30 maintenu, par l'intermédiaire d'une bague de sertissage 31, un flasque mobile 32 avec interposition, entre la bague de sertissage 31 et le flasque mobile 32, d'un roulement à billes 33.

La zone évidée, formant chambre 34 délimitée par le flasque fixe 30 et le flasque mobile 32, est occupée par un mécanisme 35 permettant, d'une manière connue en soi, le déplacement du flasque mobile 32 par rapport au flasque fixe 30. Ce mouvement s'effectue suivant l'axe $X$ - $X_1$ (voir fig. 7).

Comme dans le cas précédent, la base externe du flasque fixe 30 porte une denture fine 36 qui n'est jamais normalement en contact avec la denture 37 portée par la périphérie extérieure du flasque mobile 32; ces deux dentures n'étant en contact que 'en cas d'efforts considérables supérieurs à la normale.

L'articulation des fig. 7 et 8, dite articulation cylindrique ou ronde, peut être commandée par un mécanisme réversible ou irréversible d'un type connu en particulier par un train épicycloïdal.

A la fig. 9, l'articulation 40, qui est également ronde, est une articulation discontinue à grains dont on a représenté le flasque fixe circulaire 41 et le flasque mobile circulaire 42, cet ensemble étant maintenu par une bague de sertissage 43 présentant une déformation circulaire 44 maintenant ainsi fortement le flasque mobile 42 sur le flasque fixe 41.

La came centrale 47, commandée par un arbre 45, assure la mise en position des grains composites 46 pour régler l'inclinaison choisie du dossier par rapport à l'assise.

Comme dans les cas précédents, il est prévu (voir fig. 9 et 10), sur la partie circulaire inférieure interne 41a du flasque fixe 41, une denture fine 48 et, sur la partie périphérique extérieure 42a du flasque mobile 42, une fine denture 49 dont le rôle a déjà été expliqué pour les cas précédents.

Comme exposé ci-dessus, lors d'efforts exercés sur les dispositifs de l'articulation en particulier sur les dispositifs des articulations de dossier de siège de véhicule, les zones de mécanisme, qui assurent le positionnement, soit continu soit discontinu entre les parties fixe et mobile, subissent des efforts et la désolidarisation se produit par rupture des zones spécialement des dentures des grains qui servent de liaison entre ces parties fixe et mobile et assure leur positionnement relatif.

Lorsque ces mécanismes subissent des efforts dans un premier temps, la zone, qui sert au positionnement, subit des tassements (rattrapage des jeux) et des déformations réversibles (flexions des dents sans rupture), mais entraîne un déplacement relatif axial entre les parties fixe et mobile. Les coefficients de sécurité permettent la différence entre les liaisons des parties fixe et mobile et donc un déplacement relatif sans qu'il se produise un incident non rattrapable. Mais sous un effort beaucoup plus important, il peut se produire la rupture des différentes parties et c'est pourquoi les dentures coopérantes 10, 11 (voir fig. 3), 26,27 (voir fig. 6), 36, 37 (voir fig. 8), 48, 49 (voir fig. 9 et 10) permettent un contact direct entre les parties fixe et mobile du fait que ces dentures interfèrent.

Il y a alors ancrage direct des parties fixe et mobile du mécanisme par l'intermédiaire des dents qui absorbent les efforts et le dispositif de liaison ne subit plus d'effort supplémentaire. Lorsque l'effort diminue, l'organe de liaison (dents, grains, etc.) qui n'est pas rompu puisqu'il n'a pas subi d'effort au delà d'une déformation réversible, reprend sa position initiale et permet de ne plus interférer entre les dents et donc permet au mécanisme de jouer sa fonction de positionnement de la partie mobile par rapport à la partie fixe.

On voit ainsi que la résistance du mécanisme et donc la sécurité des dispositifs sur lesquels il est monté augmentent énormément, cette sécurité n'étant plus liée à la résistance de l'organe de liaison mais à l'accrochage direct entre les parties fixe et mobile sans destruction de l'organe de liaison tant qu'il n'y a pas rupture de la liaison directe entre les dents.

## Revendications

Dispositif d'augmentation des résistances des mécanismes articulés utilisables pour le réglage en inclinaison du dossier d'un siège ou la rehausse de sièges afin de régler l'assiette de mécanisme comprenant un flasque fixe (1, 20, 30, 41) solidaire de l'élément fixe du siège et un flasque mobile (2, 23, 32, 42) solidaire de l'autre partie mobile du siège, ces deux flasques pouvant tourner l'un par rapport à l'autre à l'aide d'un ensemble mécanique continu ou discontinu avec blocage par tous moyens convenables caractérisé en ce que le flasque fixe (1, 20, 30, 41) porte près de la périphérie intérieure, sur une zone interne de ce flasque fixe, une fine denture continue et circulaire (10, 26, 36, 48) qui n'est normalement pas en contact avec une fine denture continue et circulaire (11, 27, 37, 49) en regard disposée sur une zone périphérique externe du flasque mobile (2, 23, 32, 42), ces fines dentures continues et circulaires venant contact l'une avec l'autre sur une longueur prédéterminée lors d'une déformation du mécanisme de l'articulation sous l'effet d'un choc brutal afin d'augmenter la résistance pour éviter des déformations ou des ruptures entraînant la destruction de ces mécanismes.

## Patentansprüche

Verstärkungsanordnung für Gelenke zum Einstellen der Schräge der Rückenlehne eines Sitzes oder der Höhe von Sitzen zur Höhenverstellung des Mechanismus, mit einem mit dem feststehenden Bauteil des Sitzes fest verbundenen festen Flansch (1, 20, 30, 41) und einem mit dem anderen, beweglichen Abschnitt des Sitzes fest verbundenen beweglichen Flansch (2, 23, 32, 42), wobei diese beiden Flansche mittels einer kontinuierlichen oder diskontinuierlichen, durch alle zweckdienlichen Mittel sperrbaren mechanischen Einrichtung gegeneinander geschwenkt werden können, dadurch gekennzeichnet, daß der feststehende Flansch (1, 20, 30, 41) in der Nähe seines Innenumfangs auf einem Innenbereich dieses feststehenden Flansches eine kreisrunde und kontinuierliche Feinverzahnung (10, 26, 36, 48) trägt, die normalerweise nicht in Berührung mit einer gegenüberliegenden kontinuierlichen und kreisrunden Feinverzahnung (11, 27, 37, 49) ist, die auf einem Außenumfangsbereich des beweglichen Flansches (2, 23, 32, 42) angeordnet ist, wobei diese kontinuierlichen und kreisrunden Feinverzahnungen auf einer im voraus festgelegten Länge bei einer durch einen heftigen Stoß hervorgerufenen Verformung des Gelenkes miteinander in Berührung kommen, um durch Erhöhen des Widerstandes zur Zerstörung dieser Mechanismen führende Verformungen oder Brüche zu vermeiden.

## Claims

Strengthening device of articulated mechanism usable to control the tilting angle of the back portion of a seat or the height of seats in order to control the position of mechanism including a fixed flange (1, 20, 30, 41) rigidly connected with the fixed member of the seat and a movable flange (2, 23, 32, 42) rigidly connected with the other movable part of the seat, these two flanges being rotatable with respect to each other by means of a continuous or discontinuous mechanical assembly with a locking by any suitable means, characterized in that the fixed flange (1, 20, 30, 41) carries, close to its inner periphery, on an inner area of this fixed flange, a fine continuous and circular toothing (10, 26, 36, 48) that is not normally in contact with an opposite fine continuous and circular toothing (11, 27, 37, 49) provided on an outer peripheral area of the movable flange (2, 23, 32, 42), these fine continuous and circular toothings coming in contact with each other along a predetermined length upon a deformation of the articulation mechanism as a consequence of a sudden shock in order to increase the resistance so to avoid deformations or ruptures bringing about destruction of these mechanisms.

Fig.1

Fig.2

Fig.3

EP 0 254 638 B1

Fig.4

Fig.5

Fig.6

Fig.7

Fig.8

Fig.9

Fig.10

EP 0 254 638 B1